# EUROPÄISCHE PATENTSCHRIFT

(11) **EP 0 311 873 B1**
(45) Veröffentlichungstag und Bekanntmachung des Hinweises auf die Patenterteilung: **18.08.1993**
(21) Anmeldenummer: 88116397.6
(22) Anmeldetag: 04.10.1988
(51) Int. Cl.: C09J 103/04, C08L 3/08, C08B 31/12, D06M 15/00

(54) **Verfahren zur Herstellung eines als Kleisterbasis geeigneten Trockenproduktes**
Process for the preparation of a dry product useful as base material for an adhesive
Procédé pour la préparation d'un produit sec utilisable comme métier de base pour colle

(30) Priorität: 12.10.1987 DE 3734491
(43) Veröffentlichungstag der Anmeldung: 19.04.1989
(73) Patentinhaber: Henkel Kommanditgesellschaft auf Aktien, 40191 Düsseldorf (DE); Coöperatieve Verkoop- en Productievereniging van Aardappelmeel en Derivaten 'AVEBE' B.A., NL-9641 JA Veendam (NL)
(72) Erfinder: Wegner, Jürgen, Dr., D-4000 Düsseldorf 1 (DE); Dierichs, Wolfgang, Dr., D-4000 Düsseldorf 13 (DE); Haller, Werner, Dr., D-4006 Erkrath 2 (DE); Jansen, Johannes Jacobus, NL-9642 KS Veendam (NL); Capelle, Anthony, Dr., NL-9636 ED Zuidbroek (NL); Kamminga, Willem, NL-9636 AP Zuidbroek (NL); Guns, Jacobus, NL-9603 BB Hoogezand (NL)

(56) Entgegenhaltungen:
- EP-A- 0 080 141
- EP-A- 0 103 772
- CH-A- 240 219
- DE-C- 920 780
- FR-A- 2 279 830
- CHEMICAL ABSTRACTS, Band 96, Nr. 16, 19. April 1982, Seite 122, Zusammenfassung 124891t, Columbus, Ohio, US

## Beschreibung

Die Erfindung betrifft ein Verfahren zur Herstellung eines als Kleisterbasis geeigneten Trockenproduktes in Schuppen- oder in Granulatform.

Gemäß dem Stand der Technik werden Celluloseether-Derivate, z.B. Methylcellulose, Methyl-Hydroxypropyl-Cellulose (MHPC), Methyl-Hydroxyethyl-Cellulose (MHEC) allein oder in Kombination mit Carboxymethylcellulosen sowie üblichen Stärkederivaten (Quellstärken, Carboxymethyl-Stärken, HPS, HPCMS und dergleichen) mit redispergierfähigem PVAC-Pulver als Tapetenkleister eingesetzt. Diese pulverförmigen Tapetenkleister werden in Wasser angerührt, wobei das Pulver unter Rühren zum Wasser gegeben werden muß, um eine Klumpenbildung zu vermeiden. Dabei ist es bei solchen Tapetenkleistern, die auf Basis von Abmischungen der obengenannten Hydrokolloide aufgebaut sind, notwendig, jeweils ganze Portionseinheiten zu verwenden, um der bei diesen Produkten typische Neigung zur Entmischung der Einzelkomponenten sicher entgegenwirken zu können. Die vorgenannten Tapetenkleister weisen den zusätzlichen Nachteil einer unerwünschten Staubneigung auf, und zwar insbesondere dann, wenn im Interesse einer höheren Quellgeschwindigkeit die Korngröße der eingesetzten Einzelkomponenten klein gehalten wird. Tapetenkleister der vorstehend genannten Art sind beispielsweise aus der EP-A 0 103 772 bekannt.

Die Erfindung ist auf ein Verfahren zur Herstellung eines als Kleisterbasis geeigneten Trockenproduktes gerichtet, welches die obengenannten Anwendungsnachteile in bezug auf Klumpenneigung, Staubentwicklung und Entmischungsneigung nicht zeigt und gleichzeitig entsprechend dem Wunsch vieler Verbraucher in kürzester Zeit verarbeitungsfertig vorliegen sollte, und zwar unabhängig von dem Verfahren des Einrührens in Wasser.

Diese Aufgabe wird erfindungsgemäß durch ein Verfahren der eingangs genannten Art gelöst, gemäß dem man eine 30 bis 80 Gew.-% Wasser enthaltende Mischung von
- 30 bis 95 Gew.-% carboxymethylierter und/oder alkoxylierter Stärke,
- 3 bis 40 Gew.-% Celluloseether und
- 2 bis 40 Gew.-% in Wasser dispergierbaren Polymeren bzw. wasserlöslichen Polymeren,
gegebenenfalls unter Zusatz üblicher Additive wie Konservierungsmitteln, Netzmitteln, Füllstoffen und dergleichen,
in an sich bekannter Weise in dünner Schicht auf Flächen unter Erhitzen auf 80 bis 200°C trocknet.

Als carboxymethylierte und/oder alkoxylierte Stärke eignen sich sämtliche entsprechend modifizierten natürlichen Stärkentypen aus Kartoffeln, Mais, Weizen, Reis, Milo, Tapioka und dergleichen, wobei Derivate auf Basis von Kartoffel-und/oder Maisstärke bevorzugt sind.

Als in dem Verfahren der Erfindung einsetzbare Celluloseether eignen sich insbesondere die unter den Kurzbezeichnungen CMC, CMMC, EC, HBC, HBMC, HEC, HECMC, HEEC, HPC, HPCMC, HPMC, HEMC, MHEC, MC und PC bekannten Typen, wobei Carboxymethylcellulose (CMC) - in Form ihres Alkalisalzes -, Methylcellulose (MC), insbesondere anethoxylierte, d.h. leicht ethoxylierte Methylcellulose (MC) und Methyl-Hydroxypropyl-Cellulose (HPMC) bevorzugt sind.

Als in Wasser dispergierbare Polymere bzw. wasserlösliche Polymere eignen sich sämtliche auf dem Gebiet der Papierleime geeigneten Polymertypen, wobei Polymere aus der von Polyvinylacetat, Polyacrylat und Ethylen-Vinylacetat-Copolymeren gebildeten Gruppe bzw. wasserlösliche Polymere aus der von Polyvinylalkohol, Polyvinylpyrrolidon und Polyvinylmethylether gebildeten Gruppe bevorzugt sind.

Gemäß einer bevorzugten Ausführungsform des Verfahrens der Erfindung nimmt man die Trocknung der vorgenannten Wasser enthaltenden Mischung innerhalb von 2 bis 60 Sekunden, vorzugsweise von 5 bis 25 Sekunden, bei Temperaturen zwischen 100 und 160°C vor. Die Art der Trocknung, die zweckmäßigerweise in dünner Schicht erfolgt, ist nicht kritisch; bevorzugt wird die Trocknung auf Walzen bzw. Bandtrocknern vorgenommen, wobei die Trocknungsenergie durch Dampf bzw. IR-Heizung oder Mikrowellen zugeführt wird.

Gemäß einer weiteren vorteilhaften Ausführungsform der Erfindung verwendet man eine carboxymethylierte bzw. oxalkylierte Stärke, die gegebenenfalls mit Vernetzungsmitteln behandelt ist. Als Vernetzungsmittel eignen sich die aus dem Stand der Technik bekannten, mindestens difunktionellen Verbindungen, wie sie z.B. aus der US-PS 3 014 901 bekannt sind; weiterhin Natriumtrimetaphosphat, Phosphoroxychlorid, Diglycidylether und dergleichen. Bevorzugt werden Stärketypen eingesetzt, die einen Carboxymethylierungsgrad von 0,1 bis 2,0 (DS) bzw. einen Oxalkylierungsgrad von 0,05 bis 1,5 (MS) aufweisen.

Die erfindungsgemäß einzusetzenden Stärkederivate können somit vernetzt und insbesondere schwach vernetzt sein. Gemäß R.L. Whistler und E.F. Paschall (Hrsg.), Starch: Chemistry and Technology, Bd. II, S. 317 (1967), Academic Press, New York, sind schwach vernetzte Carboxymethyl-Stärken in heißem Wasser gelatinisierbar.

Gemäß einer weiteren vorteilhaften Ausführungsform der Erfindung setzt man gegebenenfalls vernetzte Stärke mit Chloressigsäure bzw. Alkalisalzen derselben in an sich bekannter Weise zu einer carboxymethylierten Stärke mit einem DS von 0,1 bis 2,0 um, setzt dem erhaltenen Reaktionsprodukt die Polymerdispersion und Celluloseether hinzu und trocknet das so erhaltene Gemisch in dünner Schicht durch Erhitzen auf Flächen, insbesondere Walzen oder einem endlosen Band.

Die Erfindung betrifft weiterhin Tapetenkleister, enthaltend
- 30 bis 95 Gew.-Teile carboxymethylierte und/oder alkoxylierte, gegebenenfalls vernetzte, insbesondere schwach vernetzte Stärke,
- 3 bis 40 Gew.-% Celluloseether und
- 2 bis 40 Gew.-% in Wasser dispergierbare Polymere bzw. wasserlösliche Polymere,
- sowie gegebenenfalls übliche Additive wie Konservierungsmittel, Netzmittel, Füllstoffe und dergleichen,
erhältlich nach einem der Verfahren gemäß den Patentansprüchen, wobei die Komponenten nicht physikalisch entmischt sind.

Bevorzugt sind Trockenprodukte der Erfindung, die nach ihrer Herstellung gemahlen und gesichtet werden, wobei eine Siebfraktion gesammelt wird, die die folgende Teilchengrößenverteilung aufweist:
- < 0,4 mm max. 3 Gew.-%,
- > 0,4 mm und < 1,0 mm max. 27 Gew.-%
- > 1,0 mm und < 1,6 mm max. 35 Gew.-%
- > 1,6 mm und < 3,0 mm max. 35 Gew.-%.

Trockenprodukte der vorstehend genannten Art weisen zusätzlich zu den weiter obengenannten Vorteilen die Eigenschaft auf, in leichter Weise bzw. selbständig dispergierbar zu sein.

Erfindungsgemäß herstellbare selbstdispergierbare Trockenprodukte können äußerlich, abgesehen von der vorstehend genannten bevorzugten Korngrößenverteilung, an einer bei elektronenmikroskopischer Vergrößerung von 50 bis 250 : 1 sichtbaren Schwammstruktur erkannt werden. Hierbei zeigt eine Seite eines Teilchens eine naturschwammähnliche Struktur, die andere Seite ist weitgehend glatt.

Die Erfindung betrifft weiterhin die Verwendung eines Trockenproduktes der vorstehend genannten Art zur Verwendung als selbstdispergierender bzw. leichtdispergierender Tapetenkleister.

Die Erfindung wird im folgenden anhand von bevorzugten Ausführungsbeispielen näher erläutert.

### Beispiel 1.

### Herstellung einer vernetzten, carboxymethylierten Stärke.

18 kg Kartoffelstärke (19 % H₂O) wurden in 25 kg Wasser suspendiert und mit Natronlauge auf einen pH-Wert von 11 eingestellt. Hierzu ließ man unter Rühren 4,5 g Epichlorhydrin einfließen und 16 Stunden bei 30°C stehen. Anschließend wurden in die Stärkesuspension 3,3 kg des Natriumsalzes der Monochloressigsäure eingetragen. Die Suspension wurde mittels einer Dosierpumpe mit 2,5 kg 50 %-iger Natronlauge so vermischt, daß immer proportionale Volumenteile von Suspension und Natronlauge vorlagen. Das Reaktionsgemisch wurde durch einen dampfbeheizten Statikmischer gepumpt, wobei eine Verweilzeit in der Heizzone von 30 s gegeben war. Die Produkttemperatur am Austritt betrug 95°C.

### Herstellung eines Tapetenkleisters.

In die in der vorstehend genannten Weise erhaltene, hochviskose heiße Reaktionsmischung wurden 9,69 kg einer handelsüblichen homopolymeren Polyvinylacetat-Dispersion und 6,65 kg einer handelsüblichen leicht ethoxylierten Methylcellulose gerührt.

Bei der Polyvinylacetatdispersion handelte es sich um ein weichmacherfreies, Polyvinylalkohol als Emulgator bzw. Schutzkolloid enthaltendes Produkt mit folgenden Eigenschaften:
Feststoffgehalt (DIN 53 189) ca. 50 Gew.-%
Teilchendurchmesser 500 - 5000 nm
Viskosität bei 23°C (Brookfield-Viskosimeter RVT, 20 Upm (ISO 2555)) 18000 bis 28000 mPas
pH-Wert (DIN 53 785) 3-4
Säurezahl (DIN 53 402) < 3 mg KOH/g
Mindest-Filmbildetemperatur (MFT; DIN 53 787) ca. 15°C.

Bei der handelsüblichen Methylcellulose handelte es sich um ein Produkt mit einer Brookfield-Viskosität in 2 %-iger wäßriger Lösung von 12000 mPas in Pulverform.

Die erhaltene Reaktionsmischung wurde auf einer erhitzten rotierenden Walze zu einer dünnen Schicht ausgepreßt und gleichzeitig getrocknet (Walzentemperatur 120°C, Verweilzeit 15 s). Das abgestreifte Trockenprodukt wurde anschließend auf die gewünschte Feinheit gemahlen. Eine typische Korngrößenverteilung des resultierenden Produktes (die im übrigen auch für alle übrigen Beispiele gilt) zeigte folgende angenäherte Kornverteilung:
> 2,0 mm ca. 15 %
> 1,25 mm ca. 45 %
> 0,8 mm ca. 25 %
> 0,4 mm ca. 12 %
< 0,4 mm max. 3 %.

Das Litergewicht dieser Endprodukte lag typischerweise zwischen 200 und 350 g/l.

Das erhaltene Produkt wurde anschließend einer anwendungstechnischen Untersuchung in Hinblick auf den vorgesehenen Einsatz als Tapetenkleister geprüft; die Prüfergebnisse sind in Tabelle 1 zusammengefaßt. Zu Vergleichszwecken wurde das Produkt mit einem Produkt gleicher Zusammensetzung, das jedoch nicht walzengetrocknet war, verglichen. Folgende Zusammensetzung wurde für den Vergleichsversuch gewählt:
65 % einer handelsüblichen vernetzten, schnell aufschließenden Carboxlymethyl-Kartoffelstärke,
15 % eines handelsüblichen PVAc-Redispersionspulvers mit einer der obigen Dispersion entsprechenden Spezifikation,
20 % einer handelsüblichen Methylcellulose, feinteilig und durch Behandlung mit Glyoxal retardiert löslich eingestellt sowie mit einer Brookfield-Viskosität in 2 %-iger Lösung von 12000 mPas.

Im Vergleich zum nicht-walzengetrockneten Produktgemisch gleicher Zusammensetzung zeigt das Produkt der Erfindung keine Neigung zur Entmischung im Rütteltest, ist bei Zugabe von Wasser zum Produkt selbstdispergierend, liegt in den Lösungsviskositäten etwa auf einem Niveau mit dem Vergleichsstandard, zeigt jedoch überraschenderweise eine deutlich höhere Trockenklebkraft und Feuchtfestigkeit.

### Beispiel 2.

### Herstellung einer vernetzten carboxymethylierten Stärke.

25 Gew.-Teile 40 %-ige Natronlauge wurden mit 1000 Gew.-Teilen Maisstärke innig vermischt. Anschließend wurden 1,5 Gew.-Teile Epichlorhydrin zugesetzt und das Gemisch in einem geschlossenen Gefäß eine Stunde auf etwa 60°C erhitzt. Anschließend wurde das erhaltene Reaktionsprodukt in 1200 Gew.-Teilen Wasser suspendiert und nacheinander mit 290 Gew.-Teilen Natrium-monochloracetat und 360 Teilen 9n-Natronlauge versetzt, wobei eine Verkleisterung der Stärke eintrat. Die Temperatur in dem Heizmantel des Reaktionsgefäßes wurde nunmehr im Verlauf von etwa 20 min auf 70 bis 80°C gesteigert. Bei dieser Temperatur ließ man die Reaktionsmischung noch 90 min reagieren. Das erhaltene heiße Reaktionsgemisch wurde für die weiteren Umsetzungen eingesetzt.

### Herstellung eines Tapetenkleisters.

In das in der vorstehend beschriebenen Weise erhaltene heiße Reaktionsgemisch wurden 553 g einer handelsüblichen ca. 50 %-igen Dispersion eines Acrylester-Copolymerisats und 369 g einer handelsüblichen Methylcellulose gerührt.

Das eingesetzte Acrylester-Copolymerisat weist folgende Eigenschaften auf.
Trockenrückstand 50 %
pH-Wert 7,5 bis 9
mittlerer Teilchendurchmesser 100 nm
Viskosität (Epprecht-Viskosimeter STV, Meßkörper C, Stufe III) 500 bis 1500 mPas
Dichte der Dispersion ca. 1,04 g/cm³
Dichte des Polymerisats ca. 1,08 g/cm³
MFT (0,25 mm Naßfilm) ca. 22°C.

Als Methylcellulose wurde eine pulverförmige Methylcellulose mit einer Brookfield-Viskosität von 300 mPas in 2 %-iger wäßriger Lösung eingesetzt.

Das erhaltene Reaktionsgemisch wurde anschließend analog zu der in Beispiel 1 beschriebenen Arbeitsweise über eine Trocknungswalze geführt (Walzentemperatur 130°C, Verweilzeit 10 s) und einer Grobzerkleinerung unterzogen, bevor die anwendungstechnische Vergleichsuntersuchung erfolgte. Die ermittelten Ergebnisse sind in Tabelle 1 zusammengefaßt.

Zu Vergleichszwecken wurde ein Rohstoffgemisch auf Basis von 65 % einer handelsüblichen Carboxymethylstärke in Schuppenform, 20 % einer handelsüblichen Methylcellulose und zusätzlich 15 %, bezogen auf den Festkörper, der Originaldispersion in den zubereiteten Kleister eingesetzt. Der Vergleichsversuch zeigte, daß das Produkt der Erfindung keine Entmischungsneigung zeigte, gut redispergierfähig war, in der Viskosität auf einem Niveau mit dem Vergleichsversuch lag, jedoch 10 % oberhalb des Vergleichsniveaus hinsichtlich der Trockenklebkraft lag und überraschenderweise eine vergleichbar hohe Feuchtfestigkeit aufwies. Hieraus ergibt sich, daß die Walzentrocknung offensichtlich die Redispergierfähigkeit des eingesetzten Polymeren nicht negativ beeinflußt.

### Beispiel 3.

Es wurde zunächst in der Arbeitsweise gemäß Beispiel 2 eine vernetzte carboxymethylierte Kartoffelstärke hergestellt. Zu 5090 g dieses im Reaktionsbehälter befindlichen Vorproduktes mit einem Trockenstoffgehalt von 35,3 % wurde ohne vorherige Abkühlung im Temperaturbereich von 90°C 539 g einer handelsüblichen 50 %-igen PVAc-Homopolymer-Dispersion einer Zusammensetzung gemäß Beispiel 1 sowie 90 g einer handelsüblichen feinteiligen Methylcellulose in einer Zusammensetzung gemäß Beispiel 2 zugesetzt. Anschließend wurde die hochviskose Mischung in der in Beispiel 1 beschriebenen Weise über eine Walze getrocknet und grob zerkleinert. Die ermittelten Ergebnisse sind in Tabelle 1 aufgeführt.

Als Vergleichsprodukt wurde ein physikalisches Stoffgemisch, bestehend aus 80 % einer handelsüblichen schuppenförmigen Carboxymethylstärke sowie 5 % einer handelsüblichen Methylcellulose (retardiert eingestellt; Brookfield-Viskosität einer 2 %-igen wäßrigen Lösung 3000 mPas) eingesetzt. Außerdem wurden zum angerührten Kleister in den angegebenen Ansatzverhältnissen so viel Polymerdispersion hinzugegeben, daß entsprechend dem Festkörpergehalt der Dispersion im Vergleichsprodukt ein PVAc-Anteil von 15 % resultierte.

Die Ergebnisse zeigten erneut, daß das Produkt der Erfindung keine Entmischungsneigung zeigte, gute selbstdispergierende Eigenschaften aufwies und in der Lösungsviskosität ebenso wie hinsichtlich der Trockenklebkraft und Feuchtfestigkeit je nach Ansatzverhältnis das Vergleichsprodukt entweder übertraf oder in etwa auf einem einheitlichen Niveau lag. Die Ergebnisse hinsichtlich der Feuchtfestigkeit zeigen erneut, daß die Walzentrocknung ohne Qualitätseinbuße durchgeführt werden kann.

### Beispiel 4.

Die Herstellung erfolgte in völliger Analogie zum Beispiel 1, allerdings mit dem entscheidenden Unterschied, daß anstelle einer handelsüblichen feinteiligen Methylcellulose eine handelsübliche feinteilige Carboxymethylcellulose eingesetzt und über die Walze mitgetrocknet wurde.

Die eingesetzte Carboxymethylcellulose wies die folgenden Kenndaten auf:
Viskosität (2 %): 6500 mPas (Brookfield RVT)
NaCl-Gehalt 0,45 %
pH (Lösung) 6,7
Schüttgewicht 320 g/l

Sämtliche übrigen Rezepturbestandteile und Herstellungsbedingungen entsprachen denjenigen des Beispiels 1. Die anwendungstechnische Bewertung des Produktes ergibt sich aus Tabelle 1. Ein nicht-walzengetrocknetes Vergleichsprodukt wurde wie für das Vergleichsprodukt des Beispiels 1 beschrieben hergestellt, allerdings wurden hier 20 % der vorgenannten Carboxymethylcellulose eingesetzt.

Die Ergebnisse zeigten, daß das erhaltene Produkt keinerlei Entmischungsneigung zeigte. Die Feuchtfestigkeit war für bestimmte Anwendungsfälle ausreichend.

### Beispiel 5.

In einem geschlossenen Reaktionsgefäß wurden 450 kg Kartoffelstärke (Feuchtegehalt 20 %) in 480 l Wasser suspendiert. Die Suspension wurde auf 50°C gebracht. Anschließend wurden in diese Suspension 30 l Natronlauge (Normalität 7,5 N) eingerührt. Nach einer Rührzeit von 20 min wurden zu dieser Suspension 0,77 l Epichlorhydrin und 180 l Propylenoxid in 2 Portionen von 90 l verteilt über 25 min zugegeben. Nach einer Gesamtreaktionszeit von 50 min und einer Reaktionstemperatur von 85°C wurde die Reaktionsmischung auf einen pH-Wert von 6 bis 6,5 neutralisiert.

Anschließend wurden in diese Mischung 175 g einer 50 % handelsüblichen homopolymeren Polyvinylacetat-Dispersion der in Beispiel 1 angegebenen Zusammensetzung und 117 kg einer handelsüblichen pulverförmigen Methylcellulose mit einer Brookfield-Viskosität von 12000 mPas gerührt.

Schließlich wurde die Mischung wie beschrieben einer Walzentrocknung und Grobzerkleinerung unterzogen. Das Ergebnis der anwendungstechnischen Untersuchung dieses Produktes ergibt sich aus Tabelle 1.

Das Produkt der Erfindung zeigte keine Entmischung; die übrigen Eigenschaften waren nahezu identisch mit denjenigen der physikalischen Abmischung.

### Beispiel 6.

In diesem Beispiel wurde die Verfahrensweise des Beispiels 1 exakt wiederholt, allerdings entsprechend der in Beispiel 2 angegebenen Versuchsanordnung. Das erhaltene und grob zerkleinerte Walzenprodukt zeigte die in Tabelle 1 aufgeführten Ergebnisse.

Die anwendungstechnischen Eigenschaften des erhaltenen Produktes waren im Vergleich zu denjenigen einer physikalischen Abmischung deutlich verbessert.

### Beispiel 7.

In der in Beispiel 2 beschriebenen Weise wurde eine vernetzte, carboxymethylierte Stärke hergestellt, wobei 5090 g des erhaltenen Reaktionsgemischs mit einem Trockenstoffgehalt von 35,3 % mit 200 g einer handelsüblichen homopolymeren PVAc-Dispersion der in Beispiel 1 wiedergegebenen Zusammensetzung und 100 g einer handelsüblichen Methylcellulose der in Beispiel 2 angegebenen Zusammensetzung vermischt wurden. Das Produkt wurde wie in Beispiel 1 beschrieben einer Walzentrocknung und Grobzerkleinerung unterworfen. Das Ergebnis der anwendungstechnischen Untersuchung des Produktes ergibt sich aus Tabelle 1. Das Produkt zeigt keine Entmischungsneigung. Sämtliche anwendungstechnischen Eigenschaften waren nahezu identisch mit denjenigen einer physikalischen Abmischung. Es zeigte sich jedoch auch, daß durch die geringen Zusätze von PVAc bzw. MC zu handelsüblicher CMS eine signifikante Steigerung der Klebkraft um ca. 50 % gegenüber dem reinen Produkt resultierte.

### Beispiel 8.

Analog zu Beispiel 1 wurde ein Vorgemisch hergestellt, wobei allerdings anstelle der Methylcellulose eine pulverförmige Methyl-Hydroxypropyl-Cellulose mit einer Brookfield-Viskosität von 20000 mPas eingesetzt wurde. Die Weiterverarbeitung durch Walzentrocknung und Grobzerkleinerung erfolgte ebenfalls in der in Beispiel 1 beschriebenen Weise. Die Ergebnisse der anwendungstechnischen Prüfung ergeben sich aus Tabelle 1.

Auch hier zeigte sich, daß das Produkt keinerlei Entmischungsneigung aufwies und selbsttätig dispergierte. Es war in den Viskositätswerten mit denjenigen einer physikalischen Abmischung vergleichbar und in der Trockenklebkraft geringfügig überlegen.

### Beispiel 9.

Die Durchführung dieses Beispiels erfolgte analog zu derjenigen des Beispiels 8, mit dem Unterschied, daß anstelle von MHPC eine handelsübliche, pulverförmige Methyl-Hydroxyethyl-Cellulose mit einer Brookfield-Viskosität in 2 %-iger wäßriger Lösung von 25000 mPas eingesetzt wurde. Die anwendungstechnischen Daten ergeben sich aus Tabelle 1.

Das Produkt zeigte keinerlei Entmischungserscheinungen.

### Beispiel 10.

Die Durchführung dieses Beispiels erfolgte analog zu derjenigen des Beispiels 2, wobei allerdings als Polymerkomponente 553 g einer handelsüblichen Ethylenvinylacetat-Copolymerdispersion mit folgenden Eigenschaften eingesetzt wurde:
Festkörpergehalt ca. 50 %
mittlerer Teilchendurchmesser 500 - 2000 nm
pH 4 - 5
MFT ca. 0°C

Die Walzentrocknung und Aufarbeitung erfolgte wie in Beispiel 2 beschrieben.

Die in Tabelle 1 wiedergegebenen anwendungstechnischen Daten zeigen, daß ein für bestimmte Zwecke brauchbarer Tapetenkleister mit relativ niedriger Trockenklebkraft erhalten wurde. Das Produkt zeigte im Vergleich zu einer physikalischen Abmischung keine Entmischungsneigung und war selbstdispergierbar. Die übrigen anwendungstechnischen Werte stimmen mit denjenigen der physikalischen Abmischung überein.

### Beispiel 11.

Die Herstellung dieses Produkts erfolgte analog zu derjenigen des Beispiels 1, allerdings wurden in die heiße Vormischung 5 % einer niedrig viskosen hochverseiften Polyvinylalkoholtype mit den folgenden Eigenschaften:
Viskosität (4 %, DIN 53015): 4 ± 1 mPas
Hydrolysegrad 98,4 %
pH 4,5 - 7
gegeben.

Außerdem wurden 30 % einer handelsüblichen Methylcellulose einer Zusammensetzung gemäß Beispiel 2 zugegeben. Die Ergebnisse der anwendungstechnischen Untersuchung sind in Tabelle 1 zusammengefaßt.

Die Ergebnisse zeigen, daß auch der Einsatz von wasserlöslichen Polymeren einen selbstdispergierenden Effekt ergab. Außerdem lag das Eigenschaftsspektrum des erfindungsgemäßen Produktes auf einem relativ hohen Niveau, insbesondere bezüglich der resultierenden Trockenklebkraft und Feuchtfestigkeit, die gegenüber der physikalischen Abmischung in geringem Umfang verbessert waren. Das Produkt zeigte gegenüber der physikalischen Abmischung keinerlei Entmischungsneigung.

### Beispiel 12.

In einem Reaktionsgefäß wurden 1500 g Kartofelstärke in 1800 g Wasser suspendiert. Die Suspension wurde auf 65°C gebracht und mit 120 g Natronlauge (20 %) versetzt. Die Mischung wurde 15 min gerührt.

Anschließend wurden 3 g Epichlorhydrin, gelöst in 300 g Wasser, und 522 g Propylenoxid hinzugegeben. Die Dosierzeit betrug 30 min.

Anschließend wurde die Mischung 1 h bei 70 bis 75°C gerührt. Das erhaltene Reaktionsgemisch wurde anschließend mit 62,3 g Phosphorsäure (75 %) neutralisiert. Zu dieser Mischung wurde 415 g eines handelsüblichen Polyvinylalkohols, gelöst in 1245 g Wasser von 85°C mit den folgenden Eigenschaften gegeben:
Viskosität (DIN 53015, 4 %): 5,2 - 6,0 mPas
Hydrolysegrad 98 - 99 %
pH 5- 7

Weiterhin wurden in das Reaktionsgemisch 454 g einer handelsüblichen Methylcellulose einer Zusammensetzung gemäß Beispiel 1 eingerührt. Die Mischung wurde anschließend in an sich bekannter Weise auf erhitzten Flächen getrocknet.

Das Produkt zeigte Selbstdispergierung. Der Substitutionsgrad wurde auf 0,7 bestimmt.

Die anwendungstechnischen Ergebnisse der Produkte der Erfindung gemäß den Beispielen 1 bis 11 sind in Tabelle 1 zusammengefaßt; die Daten für die Selbstdispergierung wurden mit folgender Testmethode erhalten:
1. Wasserbehälter direkt über ein 1 1-Becherglas einspannen.
2. 20 g Produkt vorlegen.
3. 800 ml Leitungswasser von 20°C in den Behälter vorlegen.
4. Hahn des Wasserbehälters ganz öffnen und die 800 ml Wasser auf das Produkt laufen lassen; anschließend Stoppuhr drücken.
5. Anschließend die Zeit messen, bis das Produkt das ganze Flüssigkeitsvolumen ausfüllt (oder bis das Produkt von unten nach oben bzw. von oben nach unten bzw. beiderseitig zusammengewachsen ist).

Dauert das Wachstum länger als 6 Minuten, wird die Messung abgebrochen und mit größer als 6 min deklariert.

Die Zeit wird in Inkrementen von 1 min angegeben, z.B.

| | |
|---|---|
| 2 bis 3 min | +++ |
| 3 bis 4 min | |
| 4 bis 5 min | ++ |
| 5 bis 6 min | + |
| > 6 min | - |

Durch Angabe der 1 min-Inkremente wird der Meßfehler sehr klein gehalten.

Als Wasserbehälter dient ein Glasgefäß (Durchmesser 8,5 cm; Höhe 15 cm), mit einer 2 cm breiten Auslauftülle mit Hahn (MS 29,2).

Die anwendungstechnischen Daten der in den Ausführungsbeispielen erwähnten, zu Vergleichszwecken hergestellten Produkte, bei denen es sich um nicht erfindungsgemäß erhaltene physikalische Gemische der Einzelkomponenten handelt, sind in Tabelle 2 zusammengefaßt.

**Tabelle 1**

| Beispiel Nr. | 1 | 2 | 3 | 4 | 5 | 6 |
|---|---|---|---|---|---|---|
| Entmischungsneigung | - | - | - | - | - | - |
| Selbstdispergierung | +++ | +++ | +++ | + | + | +++ |

| Viskosität (mPas) im Ansatzverhältnis (AV) | | | | | | |
|---|---|---|---|---|---|---|
| 1 : 25 | 42000 | 21000 | 24000 | 32000 | 25000 | 44000 |
| 1 : 32 | 16500 | 8800 | 7100 | 9400 | | 18000 |
| 1 : 40 | 5600 | 3000 | 2100 | 3800 | | 8500 |
| Trockenklebkraft in N/cm² (AV 1 : 25) | 91 | 42 | 60 | 71 | 110 | 90 |

| Beispiel Nr. | 7 | 8 | 9 | 10 | 11 | |
|---|---|---|---|---|---|---|
| Entmischungsneigung | - | - | - | - | - | |
| Selbstdispergierung | + | +++ | - | +++ | +++ | |

| Viskosität (mPas) im Ansatzverhältnis (AV) | | | | | | |
|---|---|---|---|---|---|---|
| 1 : 25 | 37000 | 70000 | 23000 | 13000 | 55000 | |
| 1 : 32 | 14400 | 21000 | 9000 | 6200 | 27000 | |
| 1 : 40 | 5200 | 7200 | 4100 | 2400 | 10000 | |
| Trockenklebkraft in N/cm² (AV 1 : 25) | 68 | 69 | 56 | 40 | 85 | |

**Tabelle 2**

| Vergleichsbeispiele | | | | | | |
|---|---|---|---|---|---|---|
| | Physikalische Abmischungen gemäß den Ausführungsbeispielen Nr. | | | | | |
| | 1 | 2 | 3 | 4 | 5 | 6 |
| Entmischungsneigung | + | + | + | + | + | + |
| Selbstdispergierung | - | - | - | - | - | - |

| Viskosität (mPas) im Ansatzverhältnis (AV) | | | | | | |
|---|---|---|---|---|---|---|
| 1 : 25 | 42000 | 19000 | 17500 | 26000 | 25000 | 42000 |
| 1 : 32 | 20000 | 8600 | 9600 | 9100 | | 20000 |
| 1 : 40 | 8400 | 3200 | 3900 | 3800 | | 8400 |
| Trockenklebkraft in N/cm² (AV 1 : 25) | 69 | 38 | 61 | 68 | 110 | 69 |

| | Physikalische Abmischungen gemäß den Ausführungsbeispielen Nr. | | | | | |
|---|---|---|---|---|---|---|
| | 7 | 8 | 9 | 10 | 11 | |
| Entmischungsneigung | + | + | + | + | + | |
| Selbstdispergierung | - | - | - | - | - | |

| Viskosität (mPas) im Ansatzverhältnis (AV) | | | | | | |
|---|---|---|---|---|---|---|
| 1 : 25 | 23000 | 65000 | 80000 | 12000 | 50000 | |
| 1 : 32 | 11600 | 19000 | 25000 | 6000 | 26000 | |
| 1 : 40 | 5800 | 6000 | 10000 | 2200 | 9400 | |
| Trockenklebkraft in N/cm² (AV 1 : 25) | 65 | 60 | 61 | 39 | 75 | |

## Patentansprüche

1. Verfahren zur Herstellung eines als Kleisterbasis geeigneten Trockenproduktes in Schuppen- oder Granulatform, dadurch gekennzeichnet, daß man eine 30 bis 80 Gew.-% Wasser enthaltende Mischung von
- 30 bis 95 Gew.-% carboxymethylierter und/oder alkoxylierter Stärke,
- 3 bis 40 Gew.-% Celluloseether und
- 2 bis 40 Gew.-% in Wasser dispergierbaren Polymeren bzw. wasserlöslichen Polymeren,
gegebenfalls unter Zusatz üblicher Additive wie Konservierungsmitteln, Netzmitteln, Füllstoffen und dergleichen,
in an sich bekannter Weise in dünner Schicht auf Flächen durch Erhitzen auf 80 bis 200°C trocknet.

2. Verfahren nach Anspruch 1, dadurch gekennzeichnet, daß man die Trocknung innerhalb von 2 bis 60 sec, vorzugsweise 5 bis 25 sec, bei Temperaturen zwischen 100 und 160°C vornimmt.

3. Verfahren nach Anspruch 1 oder 2, dadurch gekennzeichnet, daß man die Trocknung auf Walzen bzw. einem Bandtrockner vornimmt.

4. Verfahren nach einem der Ansprüche 1 bis 3, dadurch gekennzeichnet, daß die carboxymethylierte bzw. oxalkylierte Stärke mit Vernetzungsmitteln behandelt ist.

5. Verfahren nach einem der Ansprüche 1 bis 4, dadurch gekennzeichnet, daß die Stärke einen Carboxymethylierungsgrad von 0,1 bis 2,0 (DS) bzw. einen Oxalkylierungsgrad von 0,05 bis 1,5 (MS) aufweist.

6. Verfahren nach einem der Ansprüche 1 bis 5, dadurch gekennzeichnet, daß man als Celluloseether gegebenenfalls leicht ethoxylierte Methylcellulose, Methyl-Hydroxypropyl-Cellulose und/oder Carboxymethylcellulose einsetzt.

7. Verfahren nach einem der Ansprüche 1 bis 6, dadurch gekennzeichnet, daß man Polymere aus der von Polyvinylacetat, Polyacrylat und Ethylen-Vinylacetat-Copolymeren gebildeten Gruppe, vorzugsweise in Form einer Dispersion einsetzt.

8. Verfahren nach einem der Ansprüche 1 bis 6, dadurch gekennzeichnet, daß man als wasserlösliche Polymere die aus der von Polyvinylalkohol, Polyvinylpyrrolidon bzw. Polyvinylmethylether gebildeten Gruppe einsetzt.

9. Verfahren nach einem der Ansprüche 1 bis 8, dadurch gekennzeichnet, daß man gegebenenfalls vernetzte Stärke mit Chloressigsäure bzw. Alkalisalzen derselben in an sich bekannter Weise zu einer carboxymethylierten Stärke mit einem DS von 0,1 bis 2,0 umsetzt und dem Reaktionsprodukt die Polymerdispersion und den Celluloseether zusetzt sowie das erhaltene Gemisch in dünner Schicht unter Erhitzen auf Flächen, insbesondere Walzen oder einem endlosen Band, trocknet.

10. Verfahren nach einem der Ansprüche 1 bis 9, dadurch gekennzeichnet, daß man das Trockenprodukt mahlt und sichtet, wobei eine Siebfraktion gesammelt wird, die die folgende Teilchengrößenverteilung aufweist:
- < 0,4 mm max. 3 Gew.-%
- > 0,4 mm und < 1,0 mm max. 27 Gew.-%
- > 1,0 mm und < 1,6 mm max. 35 Gew.-%
- > 1,6 mm und < 3,0 mm max. 35 Gew.-%.

11. Tapetenkleister, enthaltend
- 30 bis 95 Gew.-% carboxymethylierte und/oder alkoxylierte, gegebenenfalls vernetzte, insbesondere schwach vernetzte Stärke,
- 3 bis 40 Gew.-% Celluloseether und
- 2 bis 40 Gew.-% in Wasser dispergierbare Polymere bzw. wasserlösliche Polymere,
- sowie gegebenenfalls übliche Additive wie Konservierungsmittel, Netzmittel, Füllstoffe und dergleichen,
erhältlich nach einem Verfahren gemäß einem der Ansprüche 1 bis 10.

12. Verwendung eines Trocyenproduktes gemäß einem der vorhergehenden Ansprüche zur Verwendung als selbstdispergierender bzw. leichtdispergierender Tapetenkleister.

## Claims

1. A process for the production of a dry product in flake or granular form suitable as a paste base, characterized in that a mixture - containing 30 to 80% by weight water - of
- 30 to 95% by weight carboxymethylated and/or alkoxylated starch
- 3 to 40% by weight cellulose ethers and
- 2 to 40% by weight water-dispersible polymers or water-soluble polymers,
to which standard additives, such as preservatives, wetting agents, fillers and the like, have optionally been added, is dried in a thin layer on surfaces in known manner by heating to 80 to 200°C.

2. A process as claimed in claim 1, characterized in that drying is carried out over a period of 2 to 60 seconds and preferably over a period of 5 to 25 seconds at temperatures of 100 to 160°C.

3. A process as claimed in claim 1 or 2, characterized in that drying is carried out on rollers or on a belt dryer.

4. A process as claimed in any of claims 1 to 3, characterized in that the carboxymethylated or alkoxylated starch is treated with crosslinking agents.

5. A process as claimed in any of claims 1 to 4, characterized in that the starch has a degree of carboxymethylation of 0.1 to 2.0 (DS) or a degree of alkoxylation of 0.05 to 1.5 (MS).

6. A process as claimed in any of claims 1 to 5, characterized in that optionally lightly ethoxylated methyl cellulose, methylhydroxypropyl cellulose and/or carboxymethyl cellulose is used as the cellulose ether.

7. A process as claimed in any of claims 1 to 6, characterized in that polymers from the group consisting of polyvinyl acetate, polyacrylate and ethylene/vinyl acetate copolymers, preferably in the form of a dispersion, are used.

8. A process as claimed in any of claims 1 to 6, characterized in that the water-soluble polymers used are selected from the group consisting of polyvinyl alcohol, polyvinyl pyrrolidone and polyvinyl methyl ether.

9. A process as claimed in any of claims 1 to 8, characterized in that optionally crosslinked starch is reacted in known manner with chloroacetic acid or alkali metal salts thereof to form a carboxymethylated starch having a DS of 0.1 to 2.0 and the polymer dispersion and the cellulose ether are added to the reaction product and the mixture obtained is dried in a thin layer on heated surfaces, more especially rollers or an endless belt.

10. A process as claimed in any of claims 1 to 9, characterized in that the dry product is ground and sifted, a screen fraction having the following particle size distribution being collected:
- < 0.4 mm max. 3% by weight,
- > 0.4 mm and < 1.0 mm max. 27% by weight
- > 1.0 mm and < 1.6 mm max. 35% by weight
- > 1.6 mm and < 3.0 mm max. 35% by weight

11. A wallpaper paste containing
- 30 to 95% by weight carboxymethylated and/or alkoxylated, optionally crosslinked, more especially weakly crosslinked, starch,
- 3 to 40% by weight cellulose ethers and
- 2 to 40% by weight water-dispersible polymers or water-soluble polymers,
- and optionally standard additives, such as preservatives, wetting agents, fillers and the like,
obtainable by the process claimed in the claims 1 to 10.

12. The use of the dry product claimed in any of the preceding claims as a self-dispersing or readily dispersible wallpaper paste.

## Revendications

1. Procédé de préparation d'un produit sous forme de paillettes ou de granulés approprié comme matériau de base de colle, caractérisé en ce qu'un mélange de 30 à 80 % en poids d'eau contenant :
- 30 à 95 % en poids d'amidon carboxyméthylé et/ou d'amidon alcoxylé,
- 3 à 40 % en poids d'éther de cellulose et,
- 2 à 40 % en poids de polymères dispersables dans l'eau ou de polymères hydrosolubles,
le cas échéant en ajoutant des additifs usuels comme des conservateurs, des mouillants, des charges et analogues, est déposé de la manière connue en soi en couche mince sur des surfaces et est séché entre 80 et 200°C par chauffage.

2. Procédé selon la revendication 1, caractérisé en ce qu'on réalise le séchage en 2 à 60 seconde, de préférence 5 à 25 secondes à des températures comprises entre 100 et 160°C.

3. Procédé selon la revendication 1 ou 2, caractérisé en ce qu'on réalise le séchage sur des cylindres ou sur un sécheur à courroie.

4. Procédé selon l'une des revendications 1 à 3, caractérisé en ce qu'on traite l'amidon carboxyméthylé ou oxalkylé avec des agents de réticulation.

5. Procédé selon l'une des revendications 1 à 4, caractérisé en ce que l'amidon présente un taux de carboxyméthylation de 0,1 à 2,0 (DS) ou un taux d'oxalkylation de 0,05 à 1,5 (MS).

6. Procédé selon l'une des revendications 1 à 5, caractérisé en ce qu'on utilise comme éther de cellulose le cas échéant de la méthycellulose faiblement éthoxylée, de la méthyl-hydroxypropyl-cellulose et/ou de la carboxyméthylcellulose.

7. Procédé selon l'une des revendications 1 à 6, caractérisé en ce qu'on utilise des polymères du groupe constitué du poly(acétate de vinyle), du polyacrylate et des copolymères éthylène-(acétate de vinyle), de préférence sous forme d'une dispersion.

8. Procédé selon l'une des revendications 1 à 6, caractérisé en ce qu'on utilise comme polymères hydrosolubles ceux du groupe constitué de l'alcool polyvinylique, de la polyvinylpyrrolidone ou du polyvinylméthyléther.

9. Procédé selon l'une des revendications 1 à 8, caractérisé en ce qu'on fait réagir des amidons réticulés le cas échéant avec de l'acide chloroacétique ou leurs sels alcalins, de la façon connue en soi pour donner un amidon carboxyméthylé avec un DS de 0,1 à 2,0 et on ajoute au produit de réaction la dispersion de polymère et l'éther de cellulose, et on dépose le mélange obtenu en couche mince et on sèche par chauffage sur des surfaces, notamment des cylindres ou une courroie sans fin.

10. Procédé selon l'une des revendications 1 à 9, caractérisé en ce qu'on broie le produit sec et on le tamise, et on recueille une fraction tamisée qui présente la répartition granulométrique suivante :
- < 0,4 mm max 3 % en poids
- > 0,4 mm et < 1,0 mm max 27 % en poids
- > 1,0 mm et < 1,6 mm max 35 % en poids
- > 1,6 mm et < 3,0 mm max 35 % en poids.

11. Colle de papier peint contenant :
- 30 à 95 % en poids d'amidon carboxyméthylé et/ou alcoxylé, le cas échéant réticulé, notamment faiblement réticulé,
- 3 à 40 % en poids d'éther de cellulose et
- 2 à 40 % en poids de polymères dispersables dans l'eau ou de polymères hydrosolubles,
- ainsi que le cas échéant des additifs usuels tels que des conservateurs, mouillants, charges et analogues qu'on obtient selon un procédé suivant l'une des revendications 1 à 10.

12. Utilisation d'un produit sec selon l'une des revendications précédentes pour l'utilisation comme colle de papier peint autodispersable ou facilement dispersable.
